# EUROPÄISCHE PATENTSCHRIFT

(11) **EP 3 496 867 B1**
(45) Veröffentlichungstag und Bekanntmachung des Hinweises auf die Patenterteilung: **09.06.2021**
(21) Anmeldenummer: 16750163.4
(22) Anmeldetag: 09.08.2016
(51) Int. Cl.: B05B 9/01, B05B 12/00, G01L 7/16

(54) **SPRITZPISTOLE FÜR EIN HOCHDRUCKREINIGUNGSGERÄT**
SPRAY GUN FOR A HIGH-PRESSURE CLEANING DEVICE
PISTOLET DE PULVÉRISATION POUR UN APPAREIL DE NETTOYAGE HAUTE PRESSION

(43) Veröffentlichungstag der Anmeldung: 19.06.2019
(73) Patentinhaber: Alfred Kärcher SE & Co. KG, 71364 Winnenden (DE)
(72) Erfinder: MULLINS, Daniel, 73732 Esslingen (DE)
(74) Vertreter: Hoeger, Stellrecht & Partner Patentanwälte mbB
(86) Internationale Anmeldenummer: PCT/EP2016/068976
(87) Internationale Veröffentlichungsnummer: WO 2018/028769

(56) Entgegenhaltungen:
- EP-A2- 0 749 008
- WO-A1-2016/066344
- DE-U1- 9 400 583
- US-A- 2 779 304

## Beschreibung

Die Erfindung betrifft eine Spritzpistole für ein Hochdruckreinigungsgerät mit einem Flüssigkeitseinlass für unter Druck stehende Reinigungsflüssigkeit, einem Flüssigkeitsauslass zur Abgabe der Reinigungsflüssigkeit und mit einem Ventil, das zur Steuerung der Flüssigkeitsabgabe im Strömungsweg zwischen dem Flüssigkeitseinlass und dem Flüssigkeitsauslass angeordnet und mittels eines Betätigungselements betätigbar ist, und mit einer Druckerfassungs- und Anzeigeeinrichtung, die ein in Abhängigkeit von einem im Strömungsweg zwischen dem Flüssigkeitseinlass und dem Flüssigkeitsauslass herrschenden Druck der Reinigungsflüssigkeit entlang einer Schubachse verschiebbares Schubteil und ein mechanisch mit dem Schubteil gekoppeltes Anzeigeteil aufweist, das mit Hilfe des Schubteils in unterschiedliche Positionen bewegbar ist.

Mit Hilfe derartiger Spritzpistolen kann die Abgabe von Flüssigkeit, die von einem Hochdruckreinigungsgerät unter Druck gesetzt wurde, gesteuert werden. An den Flüssigkeitseinlass kann beispielsweise ein Druckschlauch angeschlossen werden, über den der Spritzpistole vom Hochdruckreinigungsgerät unter Druck gesetzte Reinigungsflüssigkeit zugeführt werden kann, und an den Flüssigkeitsauslass kann beispielsweise eine Sprühlanze und/oder eine Spritzdüse angeschlossen werden, über die die Flüssigkeit auf ein zu reinigendes Objekt gerichtet werden kann. Zur Steuerung der Flüssigkeitsabgabe kann der Benutzer mit Hilfe eines Betätigungselements das Ventil betätigen, so dass die Strömungsverbindung zwischen dem Flüssigkeitseinlass und dem Flüssigkeitsauslass wahlweise freigegeben und unterbrochen werden kann. Zum Erfassen und Anzeigen eines im Strömungsweg zwischen dem Flüssigkeitseinlass und dem Flüssigkeitsauslass herrschenden Druckes der Reinigungsflüssigkeit weisen derartige Spritzpistolen eine Druckerfassungs- und Anzeigeeinrichtung auf, so dass dem Benutzer der Druck der Reinigungsflüssigkeit angezeigt werden kann.

Aus der WO 2016/066344 A1 ist eine Spritzpistole bekannt, bei der zur Anzeige des Druckes eine Elektroeinrichtung zum Einsatz kommt, die von einer Batterie mit elektrischer Energie versorgt wird. Die Herstellung und Montage der Elektroeinrichtung ist mit nicht unbeträchtlichen Kosten verbunden.

Aus der DE 94 00 583 U1 ist eine Spritzpistole bekannt, bei der eine mechanische Druckerfassungs- und Anzeigeeinrichtung zum Einsatz kommt, die auf ein Rohrstück aufgeschraubt werden kann und einen fluchtend zum Rohrstück ausgerichteten Kolben aufweist, der von der Reinigungsflüssigkeit mit Druck beaufschlagt werden kann und entgegen einer elastischen Rückstellkraft koaxial zur Kolbenlängsachse verschoben werden kann. Der Kolben ist mechanisch mit einem Anzeigeelement gekoppelt, das mit Hilfe des Kolbens um eine koaxial zur Kolbenlängsachse ausgerichtete Drehachse gedreht werden kann. In Abhängigkeit von dem auf den Kolben einwirkenden Druck nimmt das Anzeigeelement eine bestimmte Drehstellung ein. Am Anzeigeelement kann somit der Benutzer den Druck der Reinigungsflüssigkeit ablesen. Die Ausrichtung der Drehachse des Anzeigeelements koaxial zur Kolbenlängsachse und damit auch koaxial zur Längsachse des Rohrstücks erschwert häufig die Handhabung der Spritzpistole, da der Benutzer in vielen Fällen die Ausrichtung der Spritzpistole verändern muss, um den Druck der Reinigungsflüssigkeit am Anzeigeelement zweifelsfrei ablesen zu können.

Aus der US 2,779,304 A ist eine Druckwarnanzeige bekannt, die dem Fahrer eines Lastkraftwagens einen Druckabfall im Bremssystem des Lastkraftwagens anzeigt. Die Druckwarnanzeige weist ein Gehäuse auf, das am Armaturenbrett des Lastkraftwagens montiert werden kann und in dem ein Druckstab verschiebbar gelagert ist. Eine Stirnseite des Druckstabs kann entgegen der Kraft einer Rückstellfeder mit dem im Bremssystem des Lastkraftwagens herrschenden Druck beaufschlagt werden. Über ein Umsetzgetriebe ist der Druckstab mit einem Signalstab gekoppelt. Bei einem Druckabfall im Bremssystem des Lastkraftwagens wird der Druckstab unter dem Einfluss der Rückstellfeder derart verschoben, dass der über das Umsetzgetriebe mit dem Druckstab gekoppelte Signalstab aus dem Gehäuse herausgedrückt und dadurch für den Fahrer erkennbar wird. Die Bewegung des Signalstabs erfolgt senkrecht zur Bewegung des Druckstabs.

Aufgabe der vorliegenden Erfindung ist es, eine Spritzpistole der eingangs genannten Art derart weiterzubilden, dass sie kostengünstig herstellbar ist und eine verbesserte Handhabung aufweist, indem dem Benutzer der Druck der Reinigungsflüssigkeit in ergonomisch günstiger Weise angezeigt werden kann.

Diese Aufgabe wird bei einer Spritzpistole der eingangs genannten Art erfindungsgemäß dadurch gelöst, dass das Anzeigeteil mit Hilfe des Schubteils entlang einer Anzeigenachse linear bewegbar ist, die zur Schubachse geneigt ist und gemeinsam mit der Schubachse eine Ebene definiert.

Bei der erfindungsgemäßen Spritzpistole kommt eine mechanische Druckerfassungs- und Anzeigeeinrichtung zum Einsatz. Ein Schubteil der Druckerfassungs- und Anzeigeeinrichtung ist in Abhängigkeit vom Druck der Reinigungsflüssigkeit entlang einer Schubachse linear bewegbar. Das Schubteil ist mechanisch mit einem Anzeigeteil gekoppelt, das mit Hilfe des Schubteils entlang einer Anzeigenachse linear bewegbar ist. Die Anzeigenachse ist zur Schubachse geneigt und definiert zusammen mit der Schubachse eine Ebene. Das Anzeigeteil wird mit Hilfe des Schubteils in Abhängigkeit vom Druck der Reinigungsflüssigkeit entlang der Anzeigenachse bewegt, wobei die Bewegungsrichtung des Anzeigeteils schräg oder senkrecht zur Bewegungsrichtung des Schubteils verläuft.

Die Bereitstellung eines Schubteils, das in Abhängigkeit vom Druck der Reinigungsflüssigkeit entlang einer Schubachse linear bewegbar ist, und eines Anzeigeteils, das mit Hilfe des Schubteils entlang einer zur Schubachse geneigten Anzeigenachse bewegt werden kann, gibt zum einen die Möglichkeit, die Schubachse innerhalb eines Pistolengehäuses der Spritzpistole derart auszurichten, dass mit Hilfe des Schubteils der Druck der Reinigungsflüssigkeit auf konstruktiv einfache Weise selbst bei beengten Einbauverhältnissen erfasst werden kann. Zum anderen kann die Anzeigenachse derart ausgerichtet werden, dass die Stellung des längs der Anzeigenachse bewegbaren Anzeigeteils vom Benutzer in ergonomisch günstiger Weise abgelesen werden kann, ohne dass es erforderlich ist, dass der Benutzer während der Einsatzes der Spritzpistole deren Ausrichtung verändert.

Die Druckerfassungs- und Anzeigeeinrichtung kann in einem Pistolengehäuse der Spritzpistole angeordnet sein, wobei der Bewegungsbereich des Anzeigeteils von einer transparenten Abdeckung abgedeckt ist. Durch die transparente Abdeckung hindurch kann der Benutzer die Stellung des Anzeigeteils ablesen.

Von Vorteil ist es, wenn die transparente Abdeckung auf ihrer Oberseite und/oder auf ihrer Unterseite eine Maßeinteilung trägt und/oder Symbole, die dem Benutzer einen Hinweis darauf geben, welche Reinigungsobjekte jeweils optimal gereinigt werden können, wenn das Anzeigeteil eine Stellung einnimmt, die dem jeweiligen Symbol entspricht. So sollte für empfindliche Reinigungsobjekte ein eher geringer Druck der Reinigungsflüssigkeit gewählt werden, wohingegen für sehr robuste Reinigungsobjekte ein größerer Druck für die Reinigungsflüssigkeit gewählt werden kann. Je nach herrschendem Druck nimmt das Anzeigeteil eine bestimmte Stellung ein, und anhand des der jeweiligen Stellung entsprechenden Symbols kann der Benutzer erkennen, für welche Reinigungsobjekte der aktuelle Druck optimal geeignet ist.

Der Neigungswinkel zwischen der Schubachse und der Anzeigenachse beträgt günstigerweise mindestens 10°. Insbesondere kann vorgesehen sein, dass der Neigungswinkel zwischen der Schubachse und der Anzeigenachse etwa 20° bis etwa 70° beträgt. Eine Ausrichtung der Anzeigenachse in einem Winkel von etwa 40° bis etwa 50°, insbesondere 45° zur Schubachse hat sich als besonders vorteilhaft erwiesen.

Günstig ist es, wenn das Schubteil über Getriebeelemente mit dem Anzeigeteil verbunden ist, wobei eine lineare Bewegung des Schubteils entlang der Schubachse mit Hilfe der Getriebeelemente in eine lineare Bewegung des Anzeigeteils entlang der Anzeigenachse übertragbar ist.

Bei einer vorteilhaften Ausgestaltung der Erfindung nimmt das Anzeigeteil mit zunehmender Druckbelastung des Schubteils einen zunehmenden Abstand zur Schubachse ein. Alternativ kann vorgesehen sein, dass sich das Anzeigeteil mit zunehmender Druckbelastung des Schubteils der Schubachse annähert.

Von besonderem Vorteil ist es, wenn die Bewegung des Anzeigeteils relativ zur Schubachse der Bewegung des Schubteils entgegengerichtet ist. So kann beispielsweise vorgesehen sein, dass das Schubteil mit zunehmender Druckbelastung einen zunehmenden Abstand zum Flüssigkeitsauslass der Spritzpistole einnimmt, und dass der Abstand, den das Anzeigeteil zum Flüssigkeitsauslass einnimmt, mit zunehmender Druckbelastung des Schubteils verringert wird. Je größer die Druckbelastung ist, desto mehr nähert sich das Anzeigeteil dem Flüssigkeitsauslass an.

Bei einer vorteilhaften Ausgestaltung der Erfindung weist die Spritzpistole einen Handgriff auf, der vom Benutzer mit der Hand umgriffen werden kann, wobei der Handgriff einen dem Daumen und Zeigefinger des Benutzers zugeordneten oberen Endbereich und einen dem kleinen Finger des Benutzers zugeordneten unteren Endbereich aufweist, und wobei das Anzeigeteil oberhalb des oberen Endbereichs des Handgriffs an einer Rückseite der Spritzpistole angeordnet ist.

Günstig ist es, wenn das Anzeigeteil mit zunehmender Druckbelastung des Schubteils einen zunehmenden Abstand zum oberen Endbereich des Handgriffs einnimmt. Je größer die Druckbelastung ist, desto mehr entfernt sich das Anzeigeteil bei einer derartigen Ausgestaltung der Erfindung vom oberen Endbereich des Handgriffs. Das Anzeigeteil bewegt sich somit mit zunehmender Druckbelastung immer weiter nach oben, und dies signalisiert dem Benutzer intuitiv, dass der Druck der Reinigungsflüssigkeit ansteigt.

Bei einer vorteilhaften Ausgestaltung der Erfindung ist das Schubteil über eine Kulissenführung mit dem Anzeigeteil verbunden. Die Kulissenführung ermöglicht es auf konstruktiv einfache Weise, eine lineare Bewegung des Schubteils in eine lineare Bewegung des Anzeigeteils zu übertragen.

Bevorzugt weist die Kulissenführung mindestens einen Schwenkarm auf, der am Anzeigeteil um eine Schwenkachse verschwenkbar gelagert ist und dem ein starr mit dem Schubteil verbundenes Schubelement zugeordnet ist, das in eine längliche, dem Schubelement zugeordnete Führungsausnehmung des Schwenkarms eintaucht, wobei der Schwenkarm mit Hilfe des Schubelements um die Schwenkachse verschwenkbar und das Anzeigeteil mit Hilfe des Schwenkarms entlang der Anzeigenachse verschiebbar ist. Über den mindestens einen Schwenkarm ist das Schubteil mechanisch mit dem Anzeigeteil gekoppelt. Bewegt sich das Schubteil entlang der Schubachse, so kann vom Schubteil über das Schubelement eine Kraft auf den Schwenkarm ausgeübt werden, unter deren Wirkung der Schwenkarm das Anzeigeteil entlang der Anzeigenachse verschiebt.

Bevorzugt ist die dem Schubelement zugeordnete Führungsausnehmung bogenförmig, insbesondere kreisbogenförmig ausgestaltet. Die bogenförmige Ausgestaltung der Führungsausnehmung, in die das zugeordnete Schubelement eintaucht, ermöglicht es auf konstruktiv einfache Weise, das Anzeigeteil entlang der Anzeigenachse linear zu bewegen.

Vorteilhafterweise ist die Schwenkachse des mindestens einen Schwenkarms senkrecht zu der von der Schubachse und der Anzeigenachse definierten Ebene ausgerichtet.

Das Schubelement ist bevorzugt als Schubzapfen ausgebildet, insbesondere als senkrecht zur Schubachse ausgerichteter Schubzapfen.

Der Schubzapfen ist bevorzugt zylinderförmig ausgestaltet.

Vorteilhafterweise ist der Schubzapfen einstückig mit dem Schubteil verbunden.

Es kann vorgesehen sein, dass der Schubzapfen und das Schubteil gemeinsam ein einteiliges Kunststoffformteil ausbilden.

Das Schubelement durchgreift bei einer vorteilhaften Ausführungsform der Erfindung die ihm zugeordnete Führungsausnehmung des Schwenkarms.

Bei einer besonders vorteilhaften Ausgestaltung der Erfindung weist die Spritzpistole ein Pistolengehäuse auf und dem mindestens einen Schwenkarm ist ein ortsfest im Pistolengehäuse gehaltenes Führungselement zugeordnet, das in eine längliche, dem Führungselement zugeordnete Führungsausnehmung des Schwenkarms eintaucht.

Die dem Führungselement zugeordnete Führungsausnehmung ist bevorzugt bogenförmig, insbesondere kreisbogenförmig ausgestaltet.

Das Führungselement ist günstigerweise als Führungszapfen ausgestaltet.

Insbesondere kann vorgesehen sein, dass der Führungszapfen zylinderförmig ausgebildet ist.

Bevorzugt ist der Führungszapfen senkrecht zu der von der Schubachse und der Anzeigenachse definierten Ebene ausgerichtet.

Es kann vorgesehen sein, dass das Führungselement die ihm zugeordnete Führungsausnehmung durchgreift.

Von besonderem Vorteil ist es, wenn der mindestens eine Schwenkarm eine längliche, insbesondere bogenförmige Führungsausnehmung aufweist, die sowohl einem Schubelement als auch einem Führungselement zugeordnet ist, wobei das zugeordnete Schubelement und das zugeordnete Führungselement in die bogenförmige Ausnehmung eintauchen.

Alternativ kann vorgesehen sein, dass der mindestens eine Schwenkarm zwei längliche, insbesondere bogenförmige Führungsausnehmungen aufweist, wobei eine erste Führungsausnehmung einem Schubelement zugeordnet ist und wobei eine zweite Führungsausnehmung einem Führungselement zugeordnet ist. Die beiden Führungsausnehmungen können hinter einander oder versetzt zueinander angeordnet sein, beispielsweise können sie sich entlang eines gemeinsamen Kreisbogens erstrecken.

Bei einer vorteilhaften Ausführungsform der Erfindung weist die Kulissenführung zwei Schwenkarme auf, die identisch ausgebildet sind und jeweils eine längliche, insbesondere bogenförmige Führungsausnehmung aufweisen, in die ein starr mit dem Schubteil verbundenes Schubelement eintaucht und die um eine gemeinsame Drehachse drehbar am Anzeigeteil gelagert sind. Die beiden Schwenkarme sind parallel zu der von der Schubachse und der Anzeigenachse definierten Ebene ausgerichtet, wobei diese Ebene zwischen den beiden Schwenkarmen angeordnet ist. Die beiden Schubelemente sind fluchtend zueinander ausgerichtet und stehen an einander gegenüberliegenden Seiten vom Schubteil ab.

Bevorzugt weist die Kulissenführung zwei fluchtend zueinander ausgerichtete und ortsfest im Pistolengehäuse gehaltene Führungselemente auf, die jeweils in eine längliche, insbesondere bogenförmige Ausnehmung eines Schwenkarms eintauchen.

Von besonderem Vorteil ist es, wenn die Kulissenführung spiegelsymmetrisch zu der von der Schwenkachse und der Anzeigenachse definierten Ebene ausgestaltet ist.

Bei einer vorteilhaften Ausgestaltung der Erfindung weist die Druckerfassungs- und Anzeigeeinrichtung eine Traganordnung auf, an der das Schubteil und das Anzeigeteil linear bewegbar gehalten sind.

Vorteilhafterweise umfasst die Traganordnung eine erste Linearführung, in der das Schubteil entgegen der Wirkung einer federelastischen Rückstellkraft verschiebbar gelagert ist. Die erste Linearführung führt das Schubteil entlang der Schubachse.

Von Vorteil ist es, wenn die erste Linearführung als geschlitzte Führungshülse ausgestaltet ist. Die Führungshülse kann das Schubteil aufnehmen und entlang der Schubachse führen, wobei die Schubachse die Längsachse der Führungshülse ausbildet.

Günstigerweise ist in der Führungshülse eine Rückstellfeder angeordnet, die das Schubteil bei Druckbelastung mit einer federelastischen Rückstellkraft beaufschlagt.

Bei einer vorteilhaften Ausgestaltung der Erfindung ist das Schubteil starr mit einem Messorgan verbunden, das mit einem im Strömungsweg zwischen dem Flüssigkeitseinlass und dem Flüssigkeitsauslass herrschenden Druck der Reinigungsflüssigkeit beaufschlagbar ist.

Das Messorgan kann beispielsweise in Form eines Messstabes ausgebildet sein. Der Messstab kann mit dem Schubteil starr verbunden sein und die dem Schubteil abgewandte Stirnseite des Messstabes kann mit dem Druck der Reinigungsflüssigkeit beaufschlagbar sein.

Die Traganordnung der Druckerfassungs- und Anzeigeeinrichtung weist bei einer vorteilhaften Ausgestaltung der Erfindung eine zweite Linearführung auf, in der oder an der das Anzeigeteil verschiebbar gelagert ist.

Von Vorteil ist es, wenn die zweite Linearführung als Führungsplatte ausgebildet ist.

Bevorzugt isst das Anzeigeteil an der Führungsplatte linear verschiebbar gehalten.

Die Führungsplatte ist bevorzugt senkrecht zu der von der Schubachse und der Anzeigenachse definierten Ebene ausgerichtet.

Von Vorteil ist es, wenn das Anzeigeteil ein Gleitstück ausbildet, das zumindest einen Randbereich der zweiten Linearführung umgreift. Durch das Umgreifen eines Randbereichs der zweiten Linearführung kann auf konstruktiv einfache Weise sichergestellt werden, dass das Gleitstück bei einer Bewegung entlang der zweiten Linearführung nicht unbeabsichtigt von der zweiten Linearführung abhebt.

Die Traganordnung der Druckerfassungs- und Anzeigeeinrichtung weist bei einer bevorzugten Ausgestaltung der Erfindung eine zwischen dem Schubteil und dem Anzeigeteil angeordnete Tragstruktur auf, die sich in der von der Schubachse und der Anzeigenachse definierten Ebene erstreckt.

Die Tragstruktur kann beispielsweise plattenförmig ausgestaltet sein.

Von Vorteil ist es, wenn das mindestens eine Führungselement der Kulissenführung an der Tragstruktur festgelegt ist.

Insbesondere kann vorgesehen sein, dass das mindestens eine Führungselement und die Tragstruktur einstückig miteinander verbunden sind. So kann beispielsweise vorgesehen sein, dass die Tragstruktur und das mindestens eine Führungselement gemeinsam ein einteiliges Kunststoffformteil ausbilden, an dem die erste Linearführung und die zweite Linearführung festgelegt sind.

Günstigerweise ist die Tragstruktur mit der ersten Linearführung und mit der zweiten Linearführung starr verbunden.

Von Vorteil ist es, wenn die Tragstruktur zusammen mit der ersten Linearführung und der zweiten Linearführung ein einteiliges Kunststoffformteil ausbildet.

Wie eingangs erwähnt, kann das im Strömungsweg zwischen dem Flüssigkeitseinlass und dem Flüssigkeitsauslass angeordnete Ventil mittels eines Betätigungselements betätigt werden. Günstig ist es, wenn das Betätigungselement als Handhebel ausgestaltet ist, der um eine Hebelachse verschwenkbar gelagert ist, wobei die Hebelachse senkrecht zu der von der Schubachse und der Anzeigenachse definierten Ebene ausgerichtet ist.

Das Ventil der Spritzpistole weist bei einer vorteilhaften Ausgestaltung der Erfindung ein Ventilgehäuse auf mit einem Durchgangskanal, der sich von einem Ventileinlass zu einem Ventilauslass erstreckt, außerdem weist das Ventil günstigerweise einen Schließkörper auf, der mit dem Betätigungselement gekoppelt ist und in einer Schließstellung flüssigkeitsdicht an einem Ventilsitz anliegt und mittels des Betätigungselements in eine zum Ventilsitz beabstandete Offenstellung bewegbar ist, wobei mittels der Druckerfassungs- und Anzeigeeinrichtung der stromabwärts des Ventilsitzes im Durchgangskanal herrschende Druck der Reinigungsflüssigkeit erfassbar und anzeigbar ist.

Die nachfolgende Beschreibung einer vorteilhaften Ausführungsform der Erfindung dient im Zusammenhang mit der Zeichnung der näheren Erläuterung. Es zeigen:
- Figur 1:: eine schematische Längsschnittansicht einer Spritzpistole;
- Figur 2:: eine Seitenansicht einer Druckerfassungs- und Anzeigeeinrichtung der Spritzpistole aus Figur 1, wobei ein Schubteil und ein Anzeigeteil der Druckerfassungs- und Anzeigeeinrichtung eine erste Endstellung einnehmen;
- Figur 3:: eine Seitenansicht entsprechend Figur 2, wobei das Schubteil und das Anzeigeteil eine Mittelstellung einnehmen;
- Figur 4:: eine Seitenansicht entsprechend Figur 2, wobei das Schubteil und das Anzeigeteil eine zweite Endstellung einnehmen;
- Figur 5:: eine Ansicht der Druckerfassungs- und Anzeigeeinrichtung in Richtung von Pfeil A aus Figur 2;
- Figur 6:: eine Schnittansicht der Druckerfassungs- und Anzeigeeinrichtung entlang der Linie 6-6 in Figur 5.

In der Zeichnung ist eine vorteilhafte Ausführungsform einer erfindungsgemäßen Spritzpistole schematisch dargestellt, die insgesamt mit dem Bezugszeichen 10 belegt ist. Die Spritzpistole 10 umfasst ein Pistolengehäuse 12, das von einer ersten Gehäusehalbschale 14 und einer in der Zeichnung nicht dargestellten zweiten Gehäusehalbschale gebildet wird. Das Pistolengehäuse 12 weist einen zentralen Gehäusebereich 16 auf, der zwischen einem vorderen Gehäusebereich 18 und einem hinteren Gehäusebereich 20 angeordnet ist. Der vordere Gehäusebereich 18 nimmt eine Auslassleitung 22 auf, die mit ihrem freien, dem zentralen Gehäusebereich 16 abgewandten Ende einen Flüssigkeitsauslass 24 der Spritzpistole 10 ausbildet. An den Flüssigkeitsauslass kann beispielsweise eine Spritzdüse oder eine Sprühlanze angeschlossen werden.

Der zentralen Gehäusebereich 16 nimmt ein Ventil 26 auf mit einem Ventilgehäuse 28, das einen Ventileinlass 30 und einen Ventilauslass 32 aufweist sowie einen Durchgangskanal 34, der sich vom Ventileinlass 30 bis zum Ventilauslass 32 erstreckt und in dem ein Schließkörper 36 verschiebbar gehalten ist. An den Ventilauslass 32 ist die Auslassleitung 22 angeschlossen, und der Ventileinlass 30 bildet einen Flüssigkeitseinlass 38 der Spritzpistole 10 aus, an den in dem Fachmann an sich bekannter Weise ein Druckschlauch angeschlossen werden kann, der mit einem Druckauslass eines Hochdruckreinigungsgeräts in Strömungsverbindung steht. Über den Druckschlauch kann der Spritzpistole 10 Reinigungsflüssigkeit, vorzugsweise Wasser, bereitgestellt werden, die vom Hochdruckreinigungsgerät unter Druck gesetzt wurde, und über die Auslassleitung 22 kann die Reinigungsflüssigkeit abgegeben werden.

Der hintere Gehäusebereich 20 bildet einen Handgriff 40 aus, der vom zentralen Gehäusebereich 16 absteht und der vom Benutzer mit der Hand umgriffen werden kann. Der Handgriff 40 weist einen oberen Griffbereich 42 auf, der dem Daumen und Zeigefinger des Benutzers zugeordnet ist und sich unmittelbar an den zentralen Gehäusebereich 16 anschließt, sowie einen unteren Griffbereich 44, der dem kleinen Finger des Benutzers zugeordnet ist. An den unteren Griffbereich 44 schließt sich ein Schutzbügel 46 an, der sich bis zum zentralen Gehäusebereich 16 erstreckt. Der Schutzbügel 46, der zentrale Gehäusebereich 16 und der Handgriff 40 umgeben eine Grifföffnung 48, in die der Benutzer beim Umgreifen des Handgriffs 40 mit seinen Fingern eingreifen kann.

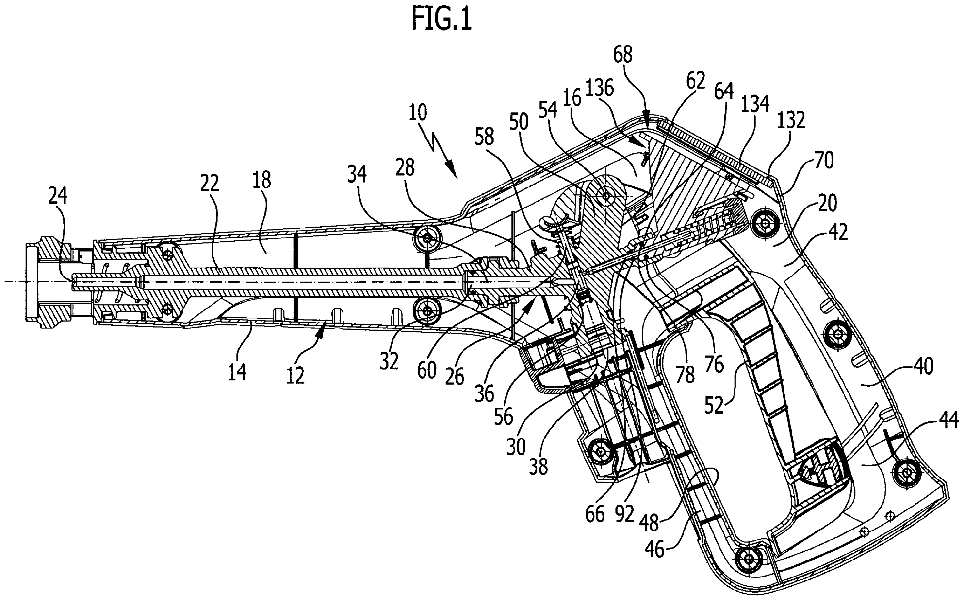

Das Ventilgehäuse 28 weist einen Ausleger 50 auf, an dem ein Handhebel 52 um eine Hebelachse 54 verschwenkbar gelagert ist. Der Handhebel 52 erstreckt sich entlang der dem Schutzbügel 46 zugewandten Vorderseite des Handgriffs 40 bis zum unteren Griffbereich 44. Der Handhebel 52 kann vom Benutzer um die Hebelachse 54 verschwenkt werden, indem der Benutzer den Handgriff 40 zusammen mit dem Handhebel 52 mit den Fingern umgreift. Durch Verschwenken des Handhebels 52 kann der Schließkörper 36 ausgehend von einer in Figur 1 dargestellten Schließstellung, in der der Schließkörper 36 an einem Ventilsitz 56 flüssigkeitsdicht anliegt, in Richtung des Ventileinlasses 30 in eine zum Ventilsitz 56 beabstandete Offenstellung verschwenkt werden. Gibt der Benutzer den Handhebel 52 frei, so kehrt der Schließkörper 36 unter der Wirkung einer Ventilfeder 58 in seine Schließstellung zurück. Hierzu wird die Kraft der Ventilfeder 58 über einen Ventilstößel 60 auf den Schließkörper 36 übertragen. In der Schließstellung unterbricht der Schließkörper 36 die Strömungsverbindung vom Flüssigkeitseinlass 38 zum Flüssigkeitsauslass, und in der Offenstellung gibt der Schließkörper 36 die Strömungsverbindung zwischen dem Flüssigkeitseinlass 38 und dem Flüssigkeitsauslass 24 frei.

An der dem Ventilauslass 32 abgewandten Rückseite 62 des Auslegers 50 weist das Ventilgehäuse 28 eine Aufnahmehülse 64 auf. Ein Messkanal 66 erstreckt sich von der Aufnahmehülse 64 bis zum Durchgangskanal 34, wobei der Messkanal 66 in einem Bereich stromabwärts des Ventilsitzes 56 in den Durchgangskanal 64 einmündet.

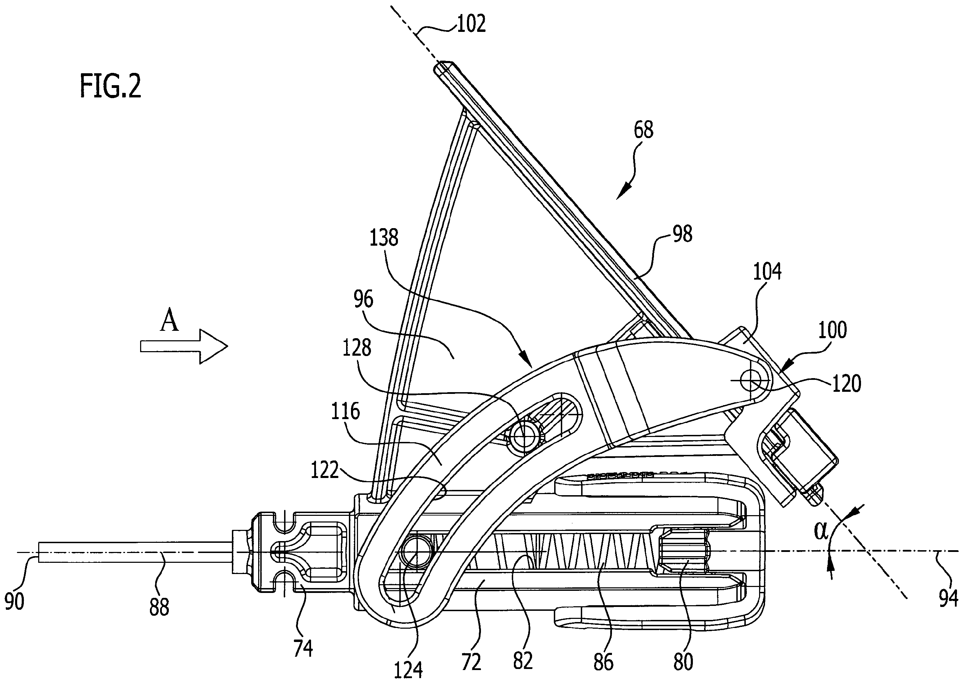

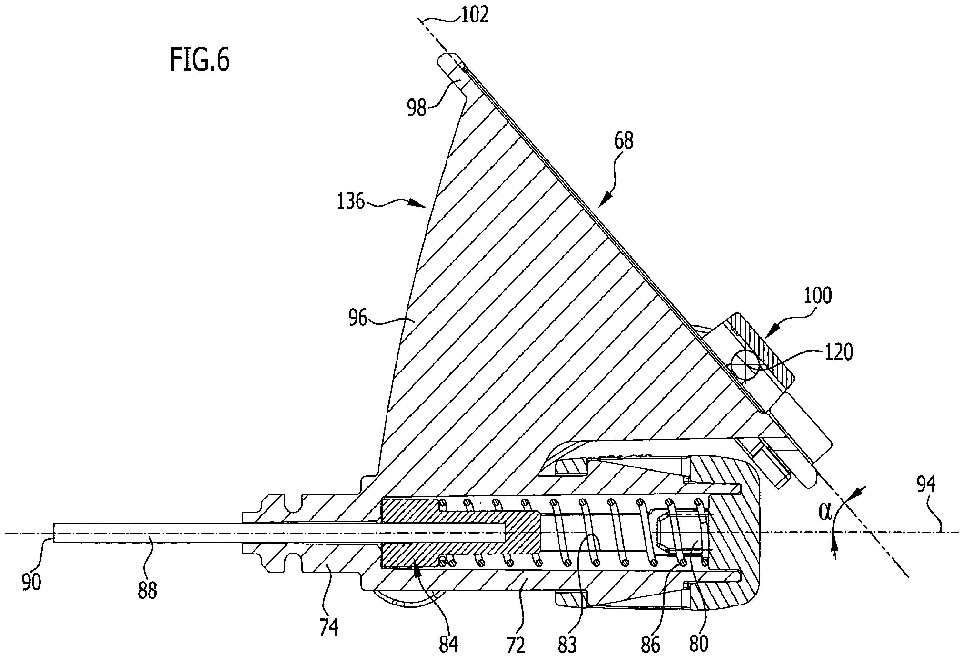

Zusätzlich zum Ventil 26 nimmt der zentrale Gehäusebereich 16 eine Druckerfassungs- und Anzeigeeinrichtung 68 auf, die zwischen dem Ventil 26 und einer dem Flüssigkeitsauslass 24 abgewandten Rückseite 70 des Pistolengehäuses 12 angeordnet ist. Die Druckerfassungs- und Anzeigeeinrichtung 68 ist in den Figuren 2 bis 6 vergrößert dargestellt. Sie weist eine erste Linearführung in Form einer Führungshülse 72 auf, die mit einem Fortsatz 74 in die Aufnahmehülse 64 eintaucht. Mit Hilfe von Klemmstiften 76, 78 ist der Fortsatz 74 in der Aufnahmehülse 64 lösbar gehalten.

Auf der dem Fortsatz 74 abgewandten Seite ist die Führungshülse 72 mittels eines Stopfens 80 verschlossen. An zwei einander diametral gegenüberliegenden Längsseiten weist die Führungshülse 72 jeweils einen Längsschlitz 82 beziehungsweise 83 auf.

Die Führungshülse 72 nimmt ein nach Art eines Kolbens ausgebildetes Schubteil 84 auf sowie eine Rückstellfeder 86, die sich einerseits am Stopfen 80 und andererseits am Schubteil 84 abstützt.

Das Schubteil 84 ist einstückig mit einem Messorgan verbunden, das in der dargestellten Ausführungsform in Form eines Messstabes 88 ausgestaltet ist. Der Messstab durchgreift den Fortsatz 74 und taucht in den Messkanal 66 ein, so dass seine dem Schubteil 84 abgewandte Stirnseite 90 mit dem Druck der Reinigungsflüssigkeit beaufschlagt wird, der stromabwärts des Ventilsitzes 56 im Durchgangskanal 34 herrscht. Innerhalb der Aufnahmehülse 64 ist der Messstab 88 von einem O-Ring 92 umgeben, der sicherstellt, dass Reinigungsflüssigkeit nicht über den Messkanal 66 aus dem Ventil 26 herausfließen kann.

Der auf die Stirnseite 90 des Messstabes 88 einwirkende Druck der Reinigungsflüssigkeit wird über den Messstab 88 auf das Schubteil 84 übertragen. Unter der Wirkung des Druckes der Reinigungsflüssigkeit kann das Schubteil 84 entgegen der federelastischen Rückstellkraft der Rückstellfeder 86 in der Führungshülse 72 entlang einer Schubachse 94 verschoben werden. Die Schubachse 94 ist identisch mit der Längsachse der Führungshülse 72 und koaxial zur Längsachse des Messstabes 88 ausgerichtet.

An die dem Handhebel 52 abgewandte Oberseite der Führungshülse 72 ist eine Tragstruktur angeformt, die im dargestellten Ausführungsbeispiel als Tragplatte 96 ausgestaltet ist. Über die Tragplatte 96 ist die Führungshülse 72 einstückig mit einer zweiten Linearführung verbunden, die in der dargestellten Ausführungsform als Führungsplatte 98 ausgestaltet ist. An der Führungsplatte 98 ist ein Anzeigeteil 100 entlang einer Anzeigenachse 102 verschiebbar gelagert. Die Anzeigenachse 102 ist zur Schubachse 94 geneigt. Im dargestellten Ausführungsbeispiel beträgt der Neigungswinkel α zwischen der Schubachse 94 und der Anzeigenachse 102 etwa 45°.

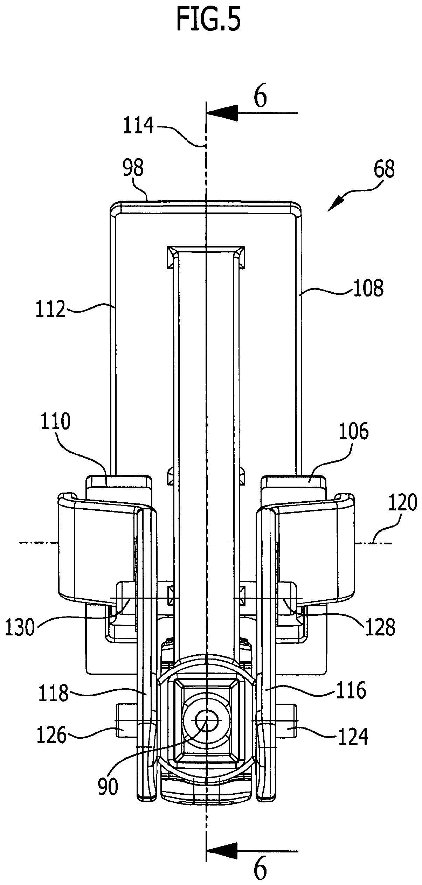

Das Anzeigeteil 100 bildet in der dargestellten Ausführungsform ein Gleitstück 104 aus, das mit einem ersten Führungsschuh 106 eine erste Längskante 108 der Führungsplatte 98 umgreift, und das mit einem zweiten Führungsschuh 110 eine zweite Längskante 112 der Führungsplatte 98 umgreift. Die zweite Längskante 112 ist parallel zur ersten Längskante 108 ausgerichtet. Dies wird aus Figur 5 deutlich.

Die Schubachse 94 definiert zusammen mit der Anzeigenachse 102 eine Mittelebene 114 der Druckerfassungs- und Anzeigeeinrichtung 68. Die Mittelebene 114 ist identisch mit der Mittelebene des Pistolengehäuses 12, an der die beiden Gehäusehalbschalen aneinander anliegen. Die Druckerfassungs- und Anzeigeeinrichtung 68 ist spiegelsymmetrisch zur Mittelebene 114 ausgestaltet.

Zur mechanischen Kopplung des Schubteils 84 mit dem Anzeigeteil 100 weist die Druckerfassungs- und Anzeigeeinrichtung 68 einen ersten Schwenkarm 116 und einen zweiten Schwenkarm 118 auf, die um eine gemeinsame Schwenkachse 120 verschwenkbar am Gleitstück 104 gelagert sind. Die beiden Schwenkarme 116, 118 weisen jeweils eine längliche, kreisbogenförmige Führungsausnehmung 122 auf, die nach Art eines Langlochs ausgestaltet ist. Die Führungsausnehmung 122 erstreckt sich über mindestens ein Viertel der Gesamtlänge des jeweiligen Schwenkarms 116, 118. Im dargestellten Ausführungsbeispiel erstreckt sich die Führungsausnehmung 122 über mehr als die Hälfte der Gesamtlänge der Schwenkarme 116, 118.

Die Führungsausnehmung 122 des ersten Schwenkarms 116 wird von einem ersten Schubelement durchgriffen, das in der dargestellten Ausführungsform als erster Schubzapfen 124 ausgestaltet ist, und die Führungsausnehmung 122 des zweiten Schwenkarms 118 wird von einem zweiten Schubelement durchgriffen, das im dargestellten Ausführungsbeispiel als zweiter Schubzapfen 126 ausgestaltet ist. Die beiden Schubzapfen 124, 126 sind einstückig mit dem Schubteil 84 verbunden, fluchtend zueinander ausgerichtet und durchgreifen jeweils einen Längsschlitz 82 beziehungsweise 83 der Führungshülse 72. Die Schubzapfen 124, 126 sind senkrecht zu der Mittelebene 114 ausgerichtet, die von der Schubachse 94 und der Anzeigenachse 102 definiert wird.

Wird das Schubteil 84 über den Messstab 88 mit dem Druck der Reinigungsflüssigkeit beaufschlagt, so bewegt es sich entlang der Schubachse 94, wobei die beiden Schubzapfen 124, 126 an der Führungsausnehmung 122 des jeweils zugeordneten Schwenkarms 116, 118 entlanggleiten.

Die Führungsausnehmung 122 des ersten Schwenkarms 116 wird nicht nur vom ersten Schubzapfen 124 durchgriffen sondern zusätzlich von einem ersten Führungselement, das starr mit der Tragplatte 96 verbunden und im dargestellten Ausführungsbeispiel als erster Führungszapfen 128 ausgestaltet ist. In entsprechender Weise wird die Führungsausnehmung 122 des zweiten Schwenkarms 118 nicht nur vom zweiten Schubzapfen 126 sondern zusätzlich von einem starr mit der Tragplatte 96 verbundenen Führungselement durchgriffen, das im dargestellten Ausführungsbeispiel als zweiter Führungszapfen 130 ausgestaltet ist. Die beiden Führungszapfen 128, 130 sind an einander gegenüberliegenden Seiten der Tragplatte 96 angeordnet, fluchtend zueinander und senkrecht zu der Mittelebene 114 ausgerichtet.

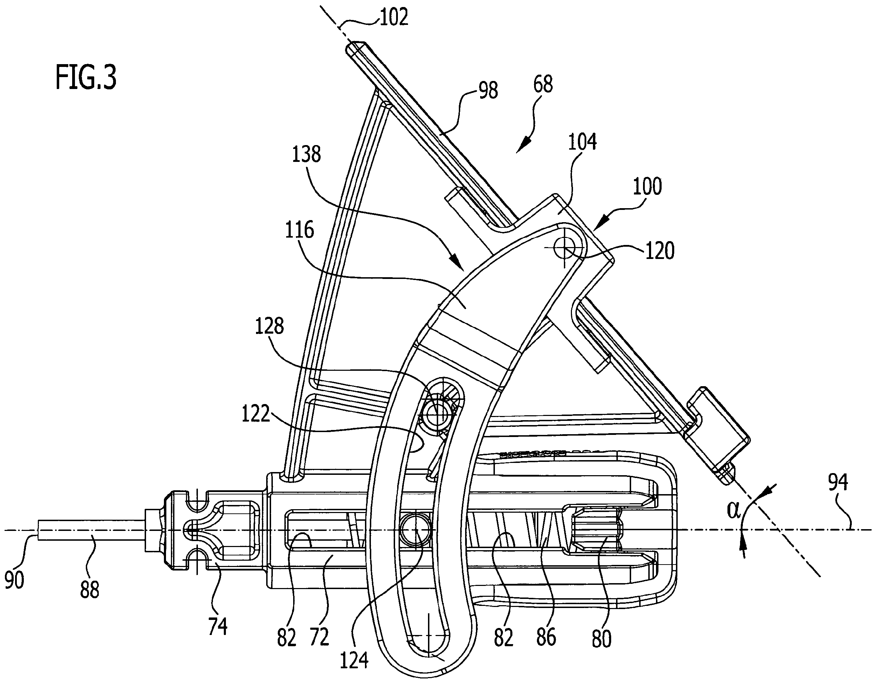

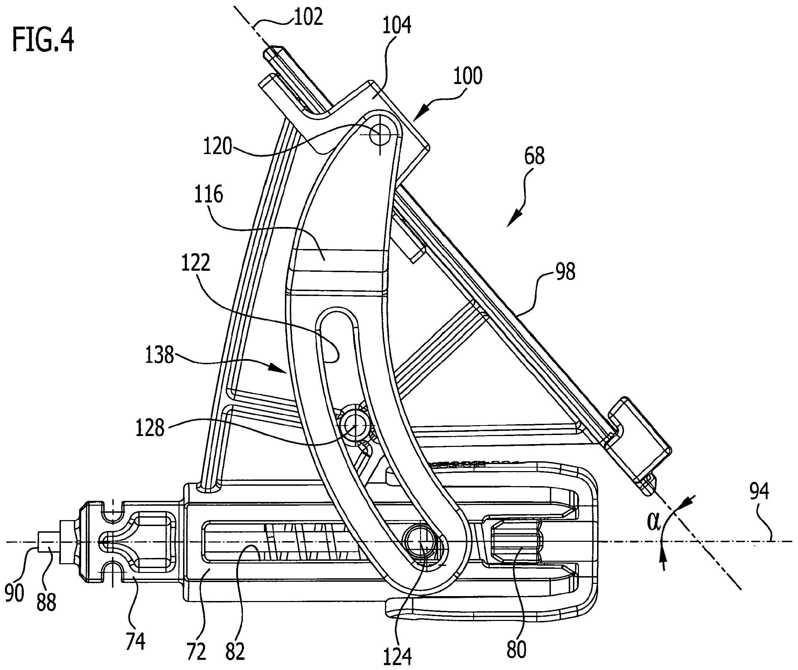

Bewegt sich das Schubteil 94 unter dem Einfluss des Druckes der Reinigungsflüssigkeit entlang der Schubachse 94, so führen die beiden Schwenkarme 116, 118 jeweils eine Schwenkbewegung um die Schwenkachse 120 aus, wobei sie das als Gleitstück 104 ausgestaltete Anzeigeteil 100 entlang der Anzeigenachse 102 bewegen. In Figur 2 sind das Schubteil 84 und das Anzeigeteil 100 in einer Endstellung dargestellt, die sie bei einem minimalen Druck der Reinigungsflüssigkeit einnehmen. In Figur 3 sind das Schubteil 84 und das Anzeigeteil 100 in einer Mittelstellung dargestellt, die sie einnehmen, wenn der Druck der Reinigungsflüssigkeit 50% des Maximaldruckes beträgt. In Figur 4 sind das Schubteil 84 und das Anzeigeteil 100 in einer zweiten Endstellung dargestellt, die sie einnehmen, wenn der Druck der Reinigungsflüssigkeit seinen Maximalwert einnimmt.

Wie aus den Figuren 2, 3 und 4 ersichtlich, bewegen sich die beiden Schwenkarme 116, 118 ausgehend von der ersten Endstellung des Anzeigeteils 100 aufgrund der auf sie einwirkenden Kraft der Schubzapfen 124, 126 zunächst in Richtung auf die Führungszapfen 128, 130 bis das Anzeigeteil 100 die Mittelstellung einnimmt, und bei der weiteren Bewegung des Anzeigeteils 100 in die zweite Endstellung entfernen sich die Schwenkarme 116, 118 wieder von den Führungszapfen 128, 130, wobei die Schwenkarme 116, 118 gleichzeitig eine Schwenkbewegung um die Schwenkachse 120 durchführen.

Das Anzeigeteil 100 nimmt mit zunehmender Druckbelastung des Schubteils 84 einen zunehmenden Abstand zur Schubachse 94 ein. Relativ zur Schubachse 94 ist die Bewegung des Anzeigeteils 100 der Bewegung des Schubteils 84 entgegengerichtet. Bewegt sich das Schubteil 84 in die dem Flüssigkeitsauslass 24 abgewandte Richtung nach hinten, dann bewegt sich das Anzeigeteil 100 schräg nach vorne und nach oben in die dem Handgriff 40 abgewandte Richtung. Bei minimaler Druckbelastung nimmt somit das Anzeigeteil 100 eine Stellung ein, die nur einen geringen Abstand zum oberen Griffbereich 42 aufweist. Mit zunehmender Druckbelastung des Schubteils 84 nimmt das Anzeigeteil 100 eine zunehmend höhere Position relativ zum oberen Griffbereich 42 ein.

Anhand der Stellung des Anzeigeteils 100 kann der Benutzer auf einfache Weise den Druck der Reinigungsflüssigkeit erkennen, der stromabwärts des Ventilsitzes 56 im Durchgangskanal 34 des Ventils 26 herrscht. Um dem Benutzer den Blick auf das innerhalb des Pistolengehäuses 12 angeordnete Anzeigeteil 100 freizugeben, weist das Pistolengehäuse 12 an der Rückseite 70 oberhalb des Handgriffs 40 eine Gehäuseöffnung 132 auf, die mit Hilfe eines transparenten Abdeckelements 134 flüssigkeitsdicht verschlossen ist, wobei das transparente Abdeckelement 134 die Führungsplatte 98 und das Anzeigeteil 100 überdeckt. An dem transparenten Abdeckelement 134 kann eine Druckskala angeordnet sein und/oder es können einzelne Bereiche mit unterschiedlichen Symbolen belegt sein, die dem Benutzer einen Hinweis darauf geben, welche Reinigungsobjekte jeweils optimal gereinigt werden können, wenn das Anzeigeteil 100 eine Stellung einnimmt, die dem jeweiligen Symbol entspricht.

Die Führungshülse 72 bildet zusammen mit der Tragplatte 96 und der Führungsplatte 98 eine einteilige Traganordnung 136 der Druckerfassungs- und Anzeigeeinrichtung 68 aus. Die Traganordnung 136 ist günstigerweise als einteiliges Kunststoffformteil ausgestaltet.

Die Schwenkarme 116, 118 bilden in Kombination mit den Schubzapfen 124, 126 und den Führungszapfen 128, 130 Getriebeelemente in Form einer Kulissenführung 138 aus, über die das Schubteil 84 mechanisch mit dem Anzeigeteil 100 gekoppelt ist.

## Patentansprüche

1. Spritzpistole für ein Hochdruckreinigungsgerät mit einem Flüssigkeitseinlass (38) für unter Druck stehende Reinigungsflüssigkeit, einem Flüssigkeitsauslass (24) zur Abgabe der Reinigungsflüssigkeit und mit einem Ventil (26), das zur Steuerung der Flüssigkeitsabgabe im Strömungsweg zwischen dem Flüssigkeitseinlass (38) und dem Flüssigkeitsauslass (24) angeordnet und mittels eines Betätigungselements betätigbar ist, und mit einer Druckerfassungs- und Anzeigeeinrichtung (68), die ein in Abhängigkeit von einem im Strömungsweg zwischen dem Flüssigkeitseinlass (38) und dem Flüssigkeitsauslass (24) herrschenden Druck der Reinigungsflüssigkeit entlang einer Schubachse (94) verschiebbares Schubteil (84) und ein mechanisch mit dem Schubteil (84) gekoppeltes Anzeigeteil (100) aufweist, das mit Hilfe des Schubteils (84) in unterschiedliche Positionen bewegbar ist, **dadurch gekennzeichnet, dass** das Anzeigeteil (100) mit Hilfe des Schubteils (84) entlang einer Anzeigenachse (102) linear bewegbar ist, die zur Schubachse (94) geneigt ist und gemeinsam mit der Schubachse (94) eine Ebene (114) definiert.

2. Spritzpistole nach Anspruch 1, **dadurch gekennzeichnet, dass** der Neigungswinkel (α) zwischen der Schubachse (94) und der Anzeigenachse (102) mindestens 10° beträgt, insbesondere etwa 20° bis etwa 70°.

3. Spritzpistole nach Anspruch 1 oder 2, **dadurch gekennzeichnet, dass** das Schubteil (84) über Getriebeelemente mit dem Anzeigeteil (100) verbunden ist, wobei eine lineare Bewegung des Schubteils (84) entlang der Schubachse (94) in eine lineare Bewegung des Anzeigeteils (100) entlang der Anzeigenachse (102) übertragbar ist.

4. Spritzpistole nach Anspruch 1, 2 oder 3, **dadurch gekennzeichnet, dass** das Anzeigeteil (100) mit zunehmender Druckbelastung des Schubteils (84) einen zunehmenden Abstand zur Schubachse (94) einnimmt.

5. Spritzpistole nach einem der voranstehenden Ansprüche, **dadurch gekennzeichnet, dass** die Bewegung des Anzeigeteils (100) relativ zur Schubachse (94) der Bewegung des Schubteils (84) entgegengerichtet ist.

6. Spritzpistole nach einem der voranstehenden Ansprüche, **dadurch gekennzeichnet, dass** das Schubteil (84) über eine Kulissenführung (138) mit dem Anzeigeteil (100) verbunden ist.

7. Spritzpistole nach Anspruch 6, **dadurch gekennzeichnet, dass** die Kulissenführung (138) mindestens einen Schwenkarm (116, 118) aufweist, der am Anzeigeteil (100) um eine Schwenkachse (120) verschwenkbar gelagert ist und dem ein starr mit dem Schubteil (100) verbundenes Schubelement zugeordnet ist, das in eine längliche, dem Schubelement zugeordnete Führungsausnehmung (122) des Schwenkarms (116, 118) eintaucht, wobei der Schwenkarm (116, 118) vom Schubelement um die Schwenkachse (120) verschwenkbar und das Anzeigeteil (100) mittels des Schwenkarms (116, 118) entlang der Anzeigenachse (102) verschiebbar ist.

8. Spritzpistole nach Anspruch 7, **dadurch gekennzeichnet, dass** die dem Schubelement zugeordnete Führungsausnehmung (122) bogenförmig ausgestaltet ist.

9. Spritzpistole nach Anspruch 7 oder 8, **dadurch gekennzeichnet, dass** die Schwenkachse (120) senkrecht zu der von der Schubachse (94) und der Anzeigenachse (102) definierten Ebene (114) ausgerichtet ist.

10. Spritzpistole nach Anspruch 7, 8 oder 9, **dadurch gekennzeichnet, dass** das Schubelement als Schubzapfen (124, 126) ausgestaltet ist.

11. Spritzpistole nach Anspruch 10, **dadurch gekennzeichnet, dass** der Schubzapfen (124, 126) senkrecht zu der von der Schubachse (94) und der Anzeigenachse (102) definierten Ebene (114) ausgerichtet ist.

12. Spritzpistole nach einem der Ansprüche 7 bis 11, **dadurch gekennzeichnet, dass** die Spritzpistole (10) ein Pistolengehäuse (12) aufweist, und dass dem mindestens einen Schwenkarm (116, 118) ein ortsfest im Pistolengehäuse (12) gehaltenes Führungselement zugeordnet ist, das in eine längliche, dem Führungselement zugeordnete Führungsausnehmung (122) des Schwenkarms (116, 118) eintaucht.

13. Spritzpistole nach Anspruch 12, **dadurch gekennzeichnet, dass** die dem Führungselement zugeordnete Führungsausnehmung (122) bogenförmig ausgestaltet ist.

14. Spritzpistole nach Anspruch 12 oder 13, **dadurch gekennzeichnet, dass** das Führungselement als Führungszapfen (128, 130) ausgestaltet ist.

15. Spritzpistole nach Anspruch 14, **dadurch gekennzeichnet, dass** der Führungszapfen (128, 130) senkrecht zu der von der Schubachse (94) und der Anzeigenachse (102) definierten Ebene (114) ausgerichtet ist.

16. Spritzpistole nach einem der Ansprüche 12 bis 15, **dadurch gekennzeichnet, dass** der mindestens eine Schwenkarm (116, 118) eine längliche Führungsausnehmung (122) aufweist, die sowohl einem Schubelement als auch einem Führungselement zugeordnet ist, wobei das zugeordnete Schubelement und das zugeordnete Führungselement in die Führungsausnehmung eintauchen.

17. Spritzpistole nach einem der voranstehenden Ansprüche, **dadurch gekennzeichnet, dass** die Druckerfassungs- und Anzeigeeinrichtung (68) eine Traganordnung (136) aufweist, an der das Schubteil (84) und das Anzeigeteil (100) linear bewegbar gehalten sind.

18. Spritzpistole nach Anspruch 17, **dadurch gekennzeichnet, dass** die Traganordnung (136) eine erste Linearführung aufweist, in der oder an der das Schubteil (84) entgegen der Wirkung einer federelastischen Rückstellkraft verschiebbar gelagert ist.

19. Spritzpistole nach Anspruch 18, **dadurch gekennzeichnet, dass** die erste Linearführung eine geschlitzte Führungshülse (72) aufweist.

20. Spritzpistole nach Anspruch 18 oder 19, **dadurch gekennzeichnet, dass** das Schubteil (84) starr mit einem Messorgan verbunden ist, das mit einem im Strömungsweg zwischen dem Flüssigkeitseinlass (38) und dem Flüssigkeitsauslass (24) herrschenden Druck der Reinigungsflüssigkeit beaufschlagbar ist.

21. Spritzpistole nach Anspruch 20, **dadurch gekennzeichnet, dass** das Messorgan als Messstab (88) ausgestaltet ist.

22. Spritzpistole nach einem der Ansprüche 17 bis 21, **dadurch gekennzeichnet, dass** die Traganordnung (136) eine zweite Linearführung aufweist, in der oder an der das Anzeigeteil (100) verschiebbar gelagert ist.

23. Spritzpistole nach Anspruch 22, **dadurch gekennzeichnet, dass** die zweite Linearführung eine Führungsplatte (98) aufweist.

24. Spritzpistole nach Anspruch 22 oder 23, **dadurch gekennzeichnet, dass** das Anzeigeteil (100) ein Gleitstück (104) ausbildet, das zumindest einen Randbereich der zweiten Linearführung umgreift.

25. Spritzpistole nach einem der Ansprüche 17 bis 24, **dadurch gekennzeichnet, dass** die Traganordnung (136) eine zwischen dem Schubteil (84) und dem Anzeigeteil (100) angeordnete Tragstruktur aufweist, die sich in der von der Schubachse (94) und der Anzeigenachse (102) definierten Ebene (114) erstreckt.

26. Spritzpistole nach Anspruch 25, **dadurch gekennzeichnet, dass** die Tragstruktur als Tragplatte (96) ausgestaltet ist.

27. Spritzpistole nach einem der voranstehenden Ansprüche, **dadurch gekennzeichnet, dass** das Betätigungselement als Handhebel (52) ausgestaltet ist, der um eine Hebelachse (54) verschwenkbar gelagert ist, wobei die Hebelachse (54) senkrecht zu der von der Schubachse (94) und der Anzeigenachse (102) definierten Ebene (114) ausgerichtet ist.

28. Spritzpistole nach einem der voranstehenden Ansprüche, **dadurch gekennzeichnet, dass** das Ventil (26) ein Ventilgehäuse (28) aufweist mit einem Durchgangskanal (34), der sich von einem Ventileinlass (30) zu einem Ventilauslass (32) erstreckt, und dass das Ventil (26) einen Schließkörper (36) aufweist, der mit dem Betätigungselement gekoppelt ist und der in einer Schließstellung flüssigkeitsdicht an einem Ventilsitz (56) anliegt und mittels des Betätigungselements in eine zum Ventilsitz (56) beabstandete Offenstellung bewegbar ist, und dass der im Durchgangskanal (34) stromabwärts des Ventilsitzes (56) herrschende Druck der Reinigungsflüssigkeit mittels der Druckerfassungs- und Anzeigeeinrichtung (68) erfassbar und anzeigbar ist.

## Claims

1. Spray gun for a high-pressure cleaning appliance, with a liquid inlet (38) for pressurised cleaning liquid, a liquid outlet (24) for dispensing the cleaning liquid, and with a valve (26) which, for controlling the dispensing of liquid, is arranged in the path of flow between the liquid inlet (38) and the liquid outlet (24) and can be actuated by means of an actuating element, and with a pressure detection and indication device (68) which comprises a thrust part (84) which is displaceable along a thrust axis (94) dependent on a pressure of the cleaning liquid prevailing in the path of flow between the liquid inlet (38) and the liquid outlet (24), and an indicating part (100) coupled mechanically with the thrust part (84), which indicating part can be moved into different positions with the aid of the thrust part (84), **characterised in that** the indicating part (100) is linearly movable with the aid of the thrust part (84) along an indication axis (102) which is inclined relative to the thrust axis (94) and together with the thrust axis (94) defines a plane (114).

2. Spray gun according to Claim 1, **characterised in that** the angle of inclination (α) between the thrust axis (94) and the indication axis (102) is at least 10°, in particular approximately 20° to approximately 70°.

3. Spray gun according to Claim 1 or 2, **characterised in that** the thrust part (84) is connected to the indicating part (100) by means of gear elements, with a linear movement of the thrust part (84) along the thrust axis (94) being able to be converted into a linear movement of the indicating part (100) along the indication axis (102).

4. Spray gun according to Claim 1, 2 or 3, **characterised in that** the indicating part (100) assumes an increasing distance from the thrust axis (94) with increasing pressure load of the thrust part (84).

5. Spray gun according to any one of the preceding claims, **characterised in that** the movement of the indicating part (100) relative to the thrust axis (94) is directed counter to the movement of the thrust part (84).

6. Spray gun according to any one of the preceding claims, **characterised in that** the thrust part (84) is connected to the indicating part (100) by means of a slotted guide arrangement (138).

7. Spray gun according to Claim 6, **characterised in that** the slotted guide arrangement (138) comprises at least one pivot arm (116, 118) which is mounted on the indicating part (100) pivotably about a pivot axis (120) and with which a thrust element rigidly connected to the thrust part (100) is associated, which element projects into an elongate guide cutout (122), associated with the thrust element, of the pivot arm (116, 118), the pivot arm (116, 118) being pivotable about the pivot axis (120) by the thrust element and the indicating part (100) being displaceable along the indication axis (102) by means of the pivot arm (116, 118).

8. Spray gun according to Claim 7, **characterised in that** the guide cutout (122) associated with the thrust element is configured to be arcuate.

9. Spray gun according to Claim 7 or 8, **characterised in that** the pivot axis (120) is oriented perpendicularly to the plane (114) defined by the thrust axis (94) and the indication axis (102).

10. Spray gun according to Claim 7, 8 or 9, **characterised in that** the thrust element is configured as a thrust pin (124, 126).

11. Spray gun according to Claim 10, **characterised in that** the thrust pin (124, 126) is oriented perpendicularly to the plane (114) defined by the thrust axis (94) and the indication axis (102).

12. Spray gun according to any one of Claims 7 to 11, **characterised in that** the spray gun (10) comprises a gun housing (12), and **in that** a guide element held in stationary manner in the gun housing (12) is associated with the at least one pivot arm (116, 118), which element projects into an elongate guide cutout (122), associated with the guide element, of the pivot arm (116, 118).

13. Spray gun according to Claim 12, **characterised in that** the guide cutout (122) associated with the guide element is configured to be arcuate.

14. Spray gun according to Claim 12 or 13, **characterised in that** the guide element is configured as a guide pin (128, 130).

15. Spray gun according to Claim 14, **characterised in that** the guide pin (128, 130) is oriented perpendicularly to the plane (114) defined by the thrust axis (94) and the indication axis (102).

16. Spray gun according to any one of Claims 12 to 15, **characterised in that** the at least one pivot arm (116, 118) comprises an elongate guide cutout (122) which is associated both with a thrust element and a guide element, the associated thrust element and the associated guide element projecting into the guide cutout.

17. Spray gun according to any one of the preceding claims, **characterised in that** the pressure detection and indication device (68) comprises a supporting arrangement (136) on which the thrust part (84) and the indicating part (100) are held so as to be linearly movable.

18. Spray gun according to Claim 17, **characterised in that** the supporting arrangement (136) comprises a first linear guide in which or on which the thrust part (84) is mounted displaceably counter to the action of a resilient restoring force.

19. Spray gun according to Claim 18, **characterised in that** the first linear guide comprises a slotted guide sleeve (72).

20. Spray gun according to Claim 18 or 19, **characterised in that** the thrust part (84) is connected rigidly to a measuring member which can be acted upon by a pressure of the cleaning liquid prevailing in the path of flow between the liquid inlet (38) and the liquid outlet (24).

21. Spray gun according to Claim 20, **characterised in that** the measuring member is configured as a measuring rod (88).

22. Spray gun according to any one of Claims 17 to 21, **characterised in that** the supporting arrangement (136) comprises a second linear guide, in which or on which the indicating part (100) is displaceably mounted.

23. Spray gun according to Claim 22, **characterised in that** the second linear guide comprises a guide plate (98).

24. Spray gun according to Claim 22 or 23, **characterised in that** the indicating part (100) forms a sliding member (104) which encompasses at least one edge region of the second linear guide.

25. Spray gun according to any one of Claims 17 to 24, **characterised in that** the supporting arrangement (136) comprises a supporting structure arranged between the thrust part (84) and the indicating part (100), which structure extends in the plane (114) defined by the thrust axis (94) and the indication axis (102).

26. Spray gun according to Claim 25, **characterised in that** the supporting structure is configured as a supporting plate (96).

27. Spray gun according to any one of the preceding claims, **characterised in that** the actuating element is configured as a manual lever (52) which is mounted pivotably about a lever axis (54), the lever axis (54) being oriented perpendicularly to the plane (114) defined by the thrust axis (94) and the indication axis (102).

28. Spray gun according to any one of the preceding claims, **characterised in that** the valve (26) comprises a valve housing (28) with a through-duct (34) which extends from a valve inlet (30) to a valve outlet (32), and **in that** the valve (26) comprises a closing member (36) which is coupled with the actuating element and which in a closed position lies in liquid-tight manner against a valve seat (56) and is movable by means of the actuating element into an open position which is spaced apart from the valve seat (56), and **in that** the pressure of the cleaning liquid prevailing in the through-duct (34) downstream from the valve seat (56) can be detected and indicated by means of the pressure detection and indication device (68).

## Revendications

1. Pistolet de pulvérisation pour un appareil de nettoyage haute pression avec une entrée de liquide (38) pour un liquide de nettoyage sous pression, une sortie de liquide (24) pour distribuer le liquide de nettoyage et avec une soupape (26), qui, pour commander la distribution de liquide, est disposée dans la voie d'écoulement entre l'entrée de liquide (38) et la sortie de liquide (24) et peut être actionnée au moyen d'un élément d'actionnement, et avec un dispositif de détection et d'affichage de pression (68), qui présente une pièce coulissante (84) pouvant se déplacer en fonction d'une pression du liquide de nettoyage régnant dans la voie d'écoulement entre l'entrée de liquide (38) et la sortie de liquide (24) le long d'un axe de poussée (94) et une pièce d'affichage (100), accouplée mécaniquement à la pièce coulissante (84), qui est mobile dans différentes positions à l'aide de la pièce coulissante (84), **caractérisé en ce que** la pièce d'affichage (100) est mobile linéairement à l'aide de la pièce coulissante (84) le long d'un axe d'affichage (102), qui est incliné par rapport à l'axe de poussée (94) et définit un plan (114) conjointement avec l'axe de poussée (94).

2. Pistolet de pulvérisation selon la revendication 1, **caractérisé en ce que** l'angle d'inclinaison (α) entre l'axe de poussée (94) et l'axe d'affichage (102) atteint au moins 10°, en particulier approximativement 20° jusqu'à approximativement 70°.

3. Pistolet de pulvérisation selon la revendication 1 ou 2, **caractérisé en ce que** la pièce coulissante (84) est reliée à la pièce d'affichage (100) par l'intermédiaire d'éléments de transmission, dans lequel un mouvement linéaire de la pièce coulissante (84) le long de l'axe de poussée (94) peut être traduit en un mouvement linéaire de la pièce d'affichage (100) le long de l'axe d'affichage (102).

4. Pistolet de pulvérisation selon la revendication 1, 2 ou 3, **caractérisé en ce que** la pièce d'affichage (100), à mesure que la pièce coulissante (84) est soumise en pression, occupe une distance croissante par rapport à l'axe de poussée (94).

5. Pistolet de pulvérisation selon l'une quelconque des revendications précédentes, **caractérisé en ce que** le mouvement de la pièce d'affichage (100) par rapport à l'axe de poussée (94) est orienté en sens inverse du mouvement de la pièce coulissante (84).

6. Pistolet de pulvérisation selon l'une quelconque des revendications précédentes, **caractérisé en ce que** la pièce coulissante (84) est reliée à la pièce d'affichage (100) par l'intermédiaire d'un guide à coulisse (138).

7. Pistolet de pulvérisation selon la revendication 6, **caractérisé en ce que** le guide à coulisse (138) présente au moins un bras pivotant (116, 118), qui est monté sur la pièce d'affichage (100) de manière à pouvoir pivoter autour d'un axe de pivotement (120) et auquel est associé un élément coulissant, relié rigidement à la pièce coulissante (100), qui s'enfonce dans un évidement de guidage (122) allongé, associé à l'élément coulissant, du bras pivotant (116, 118), dans lequel le bras pivotant (116, 118) peut être amené par l'élément coulissant à pivoter autour de l'axe de pivotement (120) et la pièce d'affichage (100) peut se déplacer le long de l'axe d'affichage (102) au moyen du bras pivotant (116, 118).

8. Pistolet de pulvérisation selon la revendication 7, **caractérisé en ce que** l'évidement de guidage (122) associé à l'élément coulissant est conçu de façon arquée.

9. Pistolet de pulvérisation selon la revendication 7 ou 8, **caractérisé en ce que** l'axe de pivotement (120) est orienté perpendiculairement au plan (114) défini par l'axe de poussée (94) et l'axe d'affichage (102).

10. Pistolet de pulvérisation selon la revendication 7, 8 ou 9, **caractérisé en ce que** l'élément coulissant est conçu en tant que tourillon coulissant (124, 126).

11. Pistolet de pulvérisation selon la revendication 10, **caractérisé en ce que** le tourillon coulissant (124, 126) est orienté perpendiculairement au plan (114) défini par l'axe de poussée (94) et l'axe d'affichage (102).

12. Pistolet de pulvérisation selon l'une quelconque des revendications 7 à 11, **caractérisé en ce que** le pistolet de pulvérisation (10) présente un boîtier de pistolet (12), et qu'un élément de guidage, retenu fixe dans le boîtier de pistolet (12), qui s'enfonce dans un évidement de guidage (122) allongé du bras pivotant (116, 118) associé à l'élément de guidage, est associé à l'au moins un bras pivotant (116, 118).

13. Pistolet de pulvérisation selon la revendication 12, **caractérisé en ce que** l'évidement de guidage (122) associé à l'élément de guidage est conçu de façon arquée.

14. Pistolet de pulvérisation selon la revendication 12 ou 13, **caractérisé en ce que** l'élément de guidage est conçu en tant que tourillon de guidage (128, 130).

15. Pistolet de pulvérisation selon la revendication 14, **caractérisé en ce que** le tourillon de guidage (128, 130) est orienté perpendiculairement au plan (114) défini par l'axe de poussée (94) et l'axe d'affichage (102).

16. Pistolet de pulvérisation selon l'une quelconque des revendications 12 à 15, **caractérisé en ce que** le au moins un bras pivotant (116, 118) présente un évidement de guidage (122) allongé, qui est associé aussi bien à un élément coulissant qu'à un élément de guidage, dans lequel l'élément coulissant associé et l'élément de guidage associé s'enfoncent dans l'évidement de guidage.

17. Pistolet de pulvérisation selon l'une quelconque des revendications précédentes, **caractérisé en ce que** le dispositif de détection et d'affichage de pression (68) présente un ensemble support (136), sur lequel la pièce coulissante (84) et la pièce d'affichage (100) sont retenues de manière mobile linéairement.

18. Pistolet de pulvérisation selon la revendication 17, **caractérisé en ce que** l'ensemble support (136) présente un premier guidage linéaire, dans lequel ou sur lequel la pièce coulissante (84) est montée de manière à pouvoir se déplacer à l'encontre de l'action d'une force de rappel élastique.

19. Pistolet de pulvérisation selon la revendication 18, **caractérisé en ce que** le premier guidage linéaire présente un manchon de guidage (72) fendu.

20. Pistolet de pulvérisation selon la revendication 18 ou 19, **caractérisé en ce que** la pièce coulissante (84) est reliée rigidement à un organe de mesure, qui peut être soumis à l'effet d'une pression du liquide de nettoyage régnant dans la voie d'écoulement entre l'entrée de liquide (38) et la sortie de liquide (24) .

21. Pistolet de pulvérisation selon la revendication 20, **caractérisé en ce que** l'organe de mesure est conçu en tant que barre de mesure (88).

22. Pistolet de pulvérisation selon l'une quelconque des revendications 17 à 21, **caractérisé en ce que** l'ensemble support (136) présente un deuxième guidage linéaire, dans lequel ou sur lequel la pièce d'affichage (100) est montée de manière à pouvoir se déplacer.

23. Pistolet de pulvérisation selon la revendication 22, **caractérisé en ce que** le deuxième guidage linéaire présente une plaque de guidage (98).

24. Pistolet de pulvérisation selon la revendication 22 ou 23, **caractérisé en ce que** la pièce d'affichage (100) réalise un coulisseau (104), qui entoure au moins une zone de bord du deuxième guidage linéaire.

25. Pistolet de pulvérisation selon l'une quelconque des revendications 17 à 24, **caractérisé en ce que** l'ensemble support (136) présente une structure de support disposée entre la pièce coulissante (84) et la pièce d'affichage (100), qui s'étend dans le plan (114) défini par l'axe de poussée (94) et l'axe d'affichage (102) .

26. Pistolet de pulvérisation selon la revendication 25, **caractérisé en ce que** la structure de support est conçue en tant que plaque de support (96).

27. Pistolet de pulvérisation selon l'une quelconque des revendications précédentes, **caractérisé en ce que** l'élément d'actionnement est conçu en tant que levier à main (52), qui est monté de manière à pouvoir pivoter autour d'un axe de levier (54), dans lequel l'axe de levier (54) est orienté perpendiculairement au plan (114) défini par l'axe de poussée (94) et l'axe d'affichage (102).

28. Pistolet de pulvérisation selon l'une quelconque des revendications précédentes, **caractérisé en ce que** la soupape (26) présente un boîtier de soupape (28) avec un canal de passage (34) qui s'étend à partir d'une entrée de soupape (30) vers une sortie de soupape (32), et que la soupape (26) présente un corps de fermeture (36), qui est accouplé à l'élément d'actionnement et qui, dans une position de fermeture, s'applique de manière étanche au liquide contre un siège de soupape (56) et est mobile au moyen de l'élément d'actionnement dans une position d'ouverture espacée du siège de soupape (56), et que la pression du liquide de nettoyage régnant dans le canal de passage (34) en aval du siège de soupape (56) peut être détectée et affichée au moyen du dispositif de détection et d'affichage de pression (68).
